# EUROPEAN PATENT SPECIFICATION

(11) **EP 2 775 956 B1**
(45) Date of publication and mention of the grant of the patent: **19.06.2019**
(21) Application number: 12795322.2
(22) Date of filing: 05.11.2012
(51) Int. Cl.: A61C 13/00, A61C 19/045, A61C 11/08, A61C 11/00

(54) **METHOD FOR PRODUCING A DENTAL ELEMENT OR AID FOR ADJUSTING THE TEETH**
VERFAHREN ZUR HERSTELLUNG EINES ZAHNÄRZTLICHEN ELEMENTS ODER EINER HILFE ZUR EINSTELLUNG DER ZÄHNE
PROCÉDÉ DE FABRICATION D'UN ÉLÉMENT OU AUXILIAIRE DENTAIRE DE RÉGLAGE DES DENTS

(30) Priority: 08.11.2011 BE 201100653
(43) Date of publication of application: 17.09.2014
(73) Proprietor: Guy Adriaens Dental Labo Bvba, 2400 Mol (BE)
(72) Inventor: ADRIAENS, Guy, Henri, Frederic, Karel, 2400 Mol (BE)
(74) Representative: D'Halleweyn, Nele Veerle Trees Gertrudis
(86) International application number: PCT/BE2012/000048
(87) International publication number: WO 2013/067606

(56) References cited:
- WO-A1-2008/031614
- WO-A1-2009/105684
- WO-A1-2012/000511
- WO-A1-2012/006717
- US-B1- 6 261 248

## Description

The present invention relates to a method for using data of a patient for the purpose of making a dental element or (virtual) aid for adjusting the teeth, and in particular for making a whole or partial prosthesis, a crown or a bridge, or a (virtual) aid made to size such as a (virtual) guide plate, for instance for implants, or a corrective mould, for instance for a gingiva correction or a bone correction.
WO 2008/031614 discloses a method for producing a dental prosthesis, comprising the following steps: obtaining the date for the teeth that are to be replaced and for their surrounding area, compiling a database containing the data for prefabricated tooth replacement parts; excluding those tooth replacement parts which, based on the data recorded for the teeth to be replaced and for their surrounding area are unsuitable for functional and/or aesthetic and/or stability reasons; selecting the tooth replacement parts to be used; using imaging software to obtain a virtual representation of the tooth replacement parts integrated into the surrounding area in the patient's dentition in accordance with customary set-up rules; recording the data of an actual situation in a patient's mouth after preparation of the affected teeth and insertion of any implants; checking the compliance of the selected tooth replacement parts with the data of the actual situation after preparation; making available the selected tooth replacement parts; modifying the selected tooth replacement parts according to the data of the actual situation after preparation.

If a patient wishes to have his or her teeth corrected, he or she makes an appointment with a dentist for this purpose. The dentist for instance takes a plaster cast of the teeth of the patient or makes a digital model of the teeth using an intra-oral scanner. This physical study model or virtual study model is then sent to a dental technician. According to the existing methods, crowns and bridges are placed based on the experience of the dental technician. The latter however has less information than the dentist. The patient is after all not present in the laboratory and the dental technician thus has to rely wholly on the study model. The dental technician does not therefore have additional information relating to the face of the patient, such as the eye line between the pupils, the camper's plane and so on.

The present invention has for its object to provide a method with which the teeth can be adjusted in a more correct manner. Advantageous embodiments of this method must allow better communication between dentist and dental technician.

The method of the invention has the features of claim 1. The system of the invention has the features of claim 7. According to a preferred embodiment, at least a first photographic image of a front view of the patient and a second photographic image of a side view of the patient are analysed, wherein a number of measures are calculated: a first measure for the direction of the canine line relative to the eye line; and a second measure for the direction of the occlusion plane relative to the camper's plane. In other words, this first and second measure thus define the inclination of the dental arch. Further made is a virtual or real study model of the whole set of teeth of the patient or a part thereof, which study model is referred to the upper jaw of the patient. On the basis of the study model a virtual or real master model is made for the dental element or aid, which master model is likewise referred to the upper jaw of the patient. The first and the second measure are transferred to the master model on the basis of the direction of the canine line and of the occlusion plane in the study model. Finally, the dental element or aid is produced on the master model on the basis of the transferred first and second measures.

By proceeding in this manner, determined parameters of the face, such as the eye line and the camper's plane, are also taken into account in making the dental element or aid, and a more correct dental element or aid can be produced for a patient.

According to an advantageous embodiment of the method, a third measure is further calculated for the position of the mid-line between the front teeth relative to the position of the centre of the line section between left and right nostril. This measure can then also be transferred to the master model on the basis of the position of the mid-line in the study model. According to another further developed embodiment, a fourth measure is also calculated for the visible length of the incisors, and this fourth measure is transferred to the master model. This third and fourth measure thus form an indication of the vertical and horizontal position of the dental arch. Note that the first and third measures could also be combined, taking into account the fact that, in an ideal tooth arrangement, the mid-line lies perpendicularly of the eye line and runs through the centre of the line section between left and right nostril.

According to a possible variant of the method of the invention, a physical study model of the teeth of the patient is made. This physical study model is arranged in an articulator. Arranging and positioning of the study model in the articulator preferably takes place in one of the following ways:
- according to a first option, the study model is positioned manually, wherein an attempt is typically made to orient the occlusion plane substantially horizontally and the mid-line is aligned relative to a vertical pin of the articulator; during this positioning the study model can be cast in plaster; a so-called split-cast technique is preferably used, although other techniques are also possible. According to the split-cast technique the study model is "adhered" with plaster to a split-cast plate which can be snapped fixedly onto an upper plate of the articulator;
- according to a second option the study model is positioned in an articulator via a bite fork of a face-bow, see below;
- according to a third option the positioning is carried out making use of a video overlay of the first and second photographic images and images of the study model taken by cameras on the articulator, see below.
After arranging the study model in the articulator the direction of the canine line and the occlusion plane are determined on the study model by means of measuring means. The study model is then removed and a master model is placed in the same position in the articulator. On the basis of the calculated first and second measures ideal directions for the canine line and the occlusion plane are then designated on the master model placed in the articulator. According to an advantageous embodiment thereof, the direction of the mid-line is also determined on the study model and the ideal direction of the mid-line is designated on the master model on the basis of the third measure. Still more preferably, an ideal tooth length is also designated on the master model on the basis of the fourth measure.

According to a particularly advantageous embodiment hereof, a light source is mounted on the articulator using positioning means. The light source is adapted to project light in a first plane and a second plane directed perpendicularly thereof. The positioning means are operated by a user so as to cause the first plane to substantially coincide with the occlusion plane and the canine line, and to cause the second plane to substantially coincide with the mid-line. The positioning means can then be operated while taking the first, second and third measures into account in order to cause the first and second planes to coincide with the ideal directions for the occlusion plane and the mid-line.

According to another aspect of the invention, the first and the second photographic image of respectively a front and side view of the patient are taken using two video cameras which are mounted in a determined disposition on a face-bow. This once again provides the advantage that the cameras are mounted in known positions relative to determined locations on the head of the patient and that the images are thus easier to process by software. According to a particularly advantageous embodiment, the two video cameras are arranged on the articulator in the same disposition as the known disposition used on the face-bow.

According to a further aspect of the invention, a physical study model is arranged in an articulator, wherein first and second images of respectively a front and side view of the study model are obtained on the basis of at least two video cameras. These first and second images are displayed on a screen and a user indicates on the screen the direction of the canine line and of the occlusion plane on these first and second images of the study model. Once these reference lines have been designated on the screen, the first and second measures can be transferred to the master model making use of the reference lines. Such a method of operation has the advantage that the images of the study model are taken in known positions of the cameras and of the study model itself, and can subsequently be processed in software in a convenient manner. This is particularly recommended when the first and second images of the patient are taken with a face-bow, wherein the cameras are in the same, known position such that an overlay of the images of the study model and of the face is easily possible.

According to yet another aspect of the invention, three cameras are provided in an articulator, i.e. two first cameras for taking first images of a front view of the patient and a second camera for taking images of the side view of the patient. It is possible in similar manner to work with a face-bow on which three cameras are provided. These three cameras are then preferably used in the same disposition on the articulator and on the face-bow. In this way a 3D image of the patient/the study model can be shown on a 3D screen and the method can be performed in 3D.

According to a further aspect of the invention, wherein two or three video cameras are arranged on the articulator and two or three video cameras are arranged on the face-bow, an overlay is made of the images of the study model with the images of the patient. A further overlay can be made here of the images of the patient with an ideal tooth arrangement, making use of the directions of the canine line and the occlusion plane in the study model and of the first and second measures.

The face-bow is provided with a first video camera arranged such that it is positioned to record a first image of the front view of a patient, and a second camera arranged such that it is positioned to record a second image of a side view of the patient. According to a variant hereof, two first video cameras can be provided for the purpose of making two images of the front view of a patient. The face-bow is further typically provided with a number of supports adapted for placing at different locations on the head of the patient. These supports are preferably such that the face-bow can be positioned substantially immovably on the head of the patient. The supports preferably comprise a support adapted for placing between the eyes, and supports adapted for positioning in the ears. A mouthpiece can optionally also be provided which is adapted for positioning in the mouth and which is useful for transferring the position relative to the upper jaw in the articulator.

An articulator for use in embodiments of the invention may be provided with indicator means mounted on positioning means connected to the articulator. The indicator means are adapted to designate, on a study or master model placed in the articulator, a first plane and a second plane directed substantially perpendicularly thereof. The positioning means are preferably adapted to cause the first plane to substantially coincide with the canine line/the occlusion plane of the teeth of the study model or with a desired canine line/occlusion plane of the teeth of a master model. The positioning means are further preferably adapted to cause the second plane to coincide with the mid-line between the front teeth of the study model or with the desired mid-line. According to an advantageous embodiment hereof, the positioning means are provided with a first digital distance measuring means for measuring a horizontal translation of the second plane; and/or with a second digital distance measuring means for measuring a vertical translation of the first plane; and/or with a first digital angle measuring device for measuring the rotation of the first plane around the intersecting line between the first and the second plane; and/or with a second digital angle measuring device for measuring the rotation of the first plane around an axis lying in the first plane and perpendicular to the intersecting line.

According to yet another aspect, an articulator is provided with at least one first video camera arranged such that it can record at least one first image of the front view of a study model or master model. The articulator further comprises a second video camera arranged such that a second image can be recorded of a side view of a study model or master model placed in the articulator.

The present invention will be further elucidated on the basis of a number of by no means limitative exemplary embodiments of the method, articulator and face-bow according to the invention, with reference to the accompanying drawings, in which:
Figure 1 is a flow diagram illustrating an embodiment of the method according to the invention;
Figure 2 illustrates a schematic perspective view of an embodiment of a face-bow for use in embodiments of the invention;
Figures 3A and 3B show schematic perspective views of an embodiment of an articulator for use in embodiments of the invention, as seen from respectively the upper side and from the underside;
Figures 4A and 4B illustrate schematic perspective views of a second embodiment of an articulator for use in embodiments of the invention, as seen from respectively the rear side and from the front side;
Figure 5 shows a number of schematic screen views by way of illustrating an embodiment of a computer program for use in embodiments of the invention.

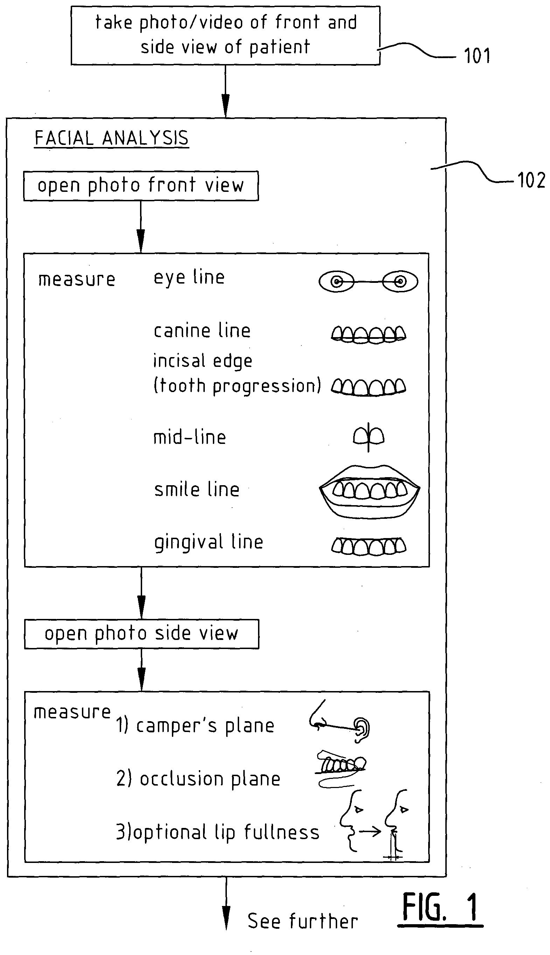

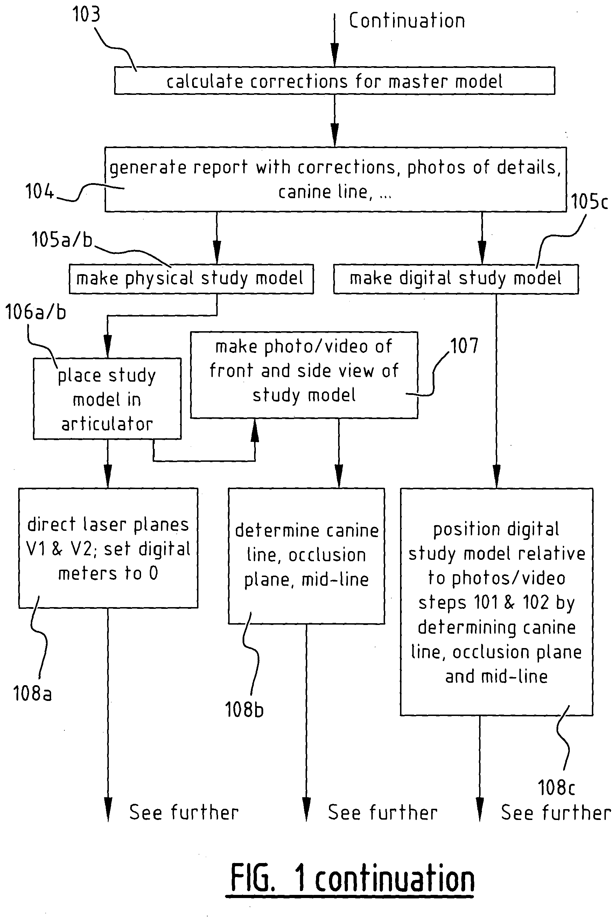

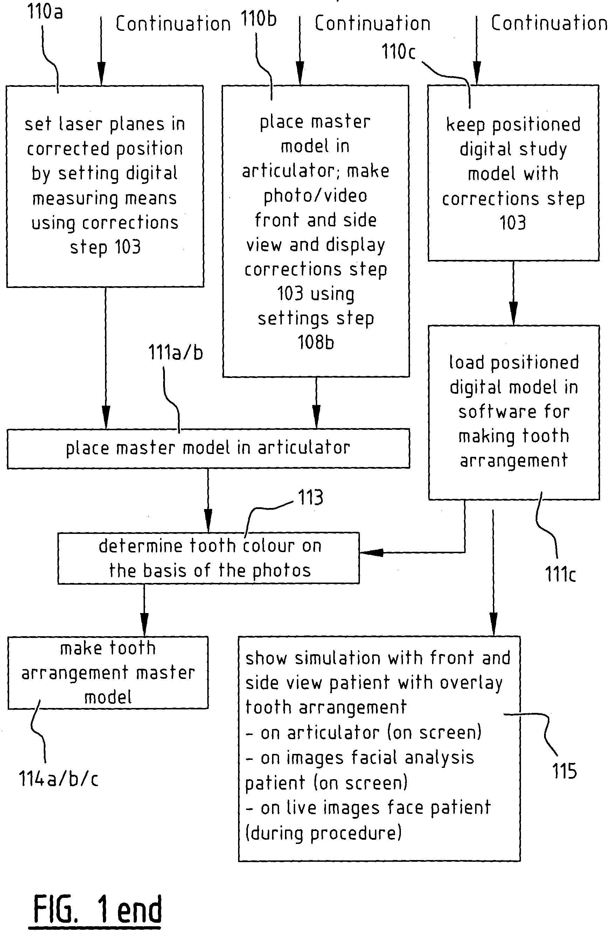

Figure 1 illustrates the different steps of an embodiment of the method according to the invention. Note that the different steps do not necessarily have to be performed in the described sequence and that in other embodiments determined steps can be omitted and/or additional steps can be added.

In step 1 a photo or a video is made of respectively the front view and the side view of a patient, see step 101. It is recommended here to be able to derive determined dimensions on the basis of the photographic material. A measuring rule can be arranged for this purpose close to the face of the patient such that this measuring rule is also visible on the photo/video and makes it possible to derive determined dimensions in the photos/videos. Note that this is only one possible embodiment and that it is for instance also possible to work with a sticker with known dimensions which is arranged on the face of the patient, or to make use of a time-of-flight camera which also records the distances between the object on the photo and the camera, and allows other dimensions in the face of the patient to be derived. According to yet another option, a reference length on a plaster model of the teeth is measured.

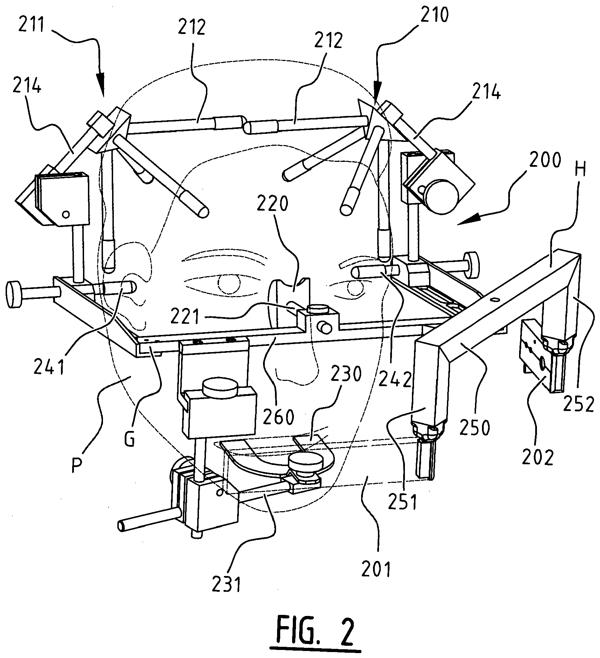

For the purpose of taking the photos/video in front and side view it is possible to work according to a prescribed protocol, for instance three photos in front view (for instance a first photo while the patient smiles normally, a second photo with raised upper lip and a third photo while the patient speaks), and three photos of a right-hand side view, of a left-hand side view, including a photo in which the references for the occlusion plane are readily visible. The side view most suitable for deriving the occlusion plane is preferably chosen here, see below. According to another variant, use can be made of a face-bow on which cameras are mounted for the purpose of making video recordings of the front and side view of the head of the patient while the patient smiles, speaks and so on. An embodiment of a suitable face-bow is illustrated in figure 2. Face-bow 200 is provided with two first supports 210, 211 which are adapted to be positioned on the head of the patient. In the illustrated embodiment these supports 210, 211 are each provided with four legs 212. Supports 210, 211 are connected via an adjustable arm 214 to the frame G of the face-bow. Further provided is a support 220 adapted for placing between the eyes, on the upper side of the nose. Support 220 is connected by means of an adjustable arm 221 to the frame G of the face-bow. Also provided are supports 241, 242 adapted for placing in the ears of the patient. Supports 241, 242 are formed substantially by one leg connected adjustably to the frame. Finally provided is a mouthpiece 230 which is adapted for placing in the mouth. This is for instance a bite fork with wax wafer for the upper jaw to bite into. Mouthpiece 230 is connected to the frame by means of an adjustable arm 231. The skilled person will appreciate that other variants of the supports can be envisaged without departing from the scope of the invention. The whole of supports preferably allows a unique positioning on the head of the patient such that the face-bow is mounted immovably on the head of the patient.

Note that supports 210, 211 can be omitted. The software used to process the photos/video images can further be adapted to correct possible movements of the face-bow relative to the head of the patient.

The face-bow is further provided with an auxiliary frame H which is connected to the main frame G. This auxiliary frame H is adapted for mounting thereon of two video cameras 201 and a second video camera 202 for recording images of respectively the front and side view of the patient. Auxiliary frame H consists of a substantially horizontal arm 250 which can be mounted at a determined angle on frame G. Frame G comprises an arm 260 which is intended for the purpose of extending substantially parallel to the face of the patient, and arm 250 is then intended to extend at an angle of about 45° relative to arm 260. Arm 250 is provided at its outer ends with respective carrier parts 251, 252 for video cameras 201, 202. Note that the auditory canal does not lie in the view of video camera 202, although the position thereof relative to the image is known, so that the camper's plane can be determined, see below.

The variant illustrated in figure 2 uses two cameras 201 for recording the front view for the purpose of generating a 3D effect went use is made of a 3D screen and/or for the purpose of recording the face in 3D. It is however also possible to use only one camera 201 for the purpose of recording the front view. Via such a camera setup with two or three cameras a number of photos are taken or a video, in which the patient speaks, smiles, raises the lip very high and so on, is recorded for a short time. A facial analysis is then performed on the basis of the photos taken or on the basis of a number of frames from the video, see step 102.

The facial analysis on the basis of the photos or video frames can be performed by the dentist him/herself or at a technical laboratory. The facial analysis is preferably performed by software written especially for the purpose. In order to perform a complete facial analysis use is preferably made of:
- a plurality of front view photos of the patient showing:
   * the eyes;
   * the mid-line between the two front teeth;
   * the tooth progression (the centre of the incisal edge, the cuspid apexes) of the six front teeth;
   * the smile line, i.e. the coverage of the teeth by the lip during smiling;
   * the gum progression of the six front teeth;
   * the lip coverage of the central front tooth during speaking;
   * the two nostrils;
   * optionally a measuring rule which is preferably arranged under the chin, substantially parallel to the front teeth and at the same distance from the lens as the teeth for measuring to enable calibration of the photo; according to another option, a reference length is measured on a plaster model of the teeth; in the case a face-bow as described with reference to figure 2 is used, the distances in the images made can be derived from the known positions of the cameras, and no measuring rule or other reference length is therefore necessary.
- A plurality of side view photos showing:
   * lips at rest on each other in order to assess the lip fullness in profile;
   * front teeth bared by smiling in order to assess the position and inclination of the front teeth;
   * the tooth progression (the centre of the incisal edge, cuspid apexes) of the central and lateral incisor and canine tooth and the most dorsal visible tooth with the jaw pulled far to the side;
   * tip of the nose and auditory canal to enable the camper's plane to be determined; in the case the face-bow of figure 2 is used, the auditory canal need not be visible since it is a known point relative to the image;
   * optionally a measuring rule, preferably at the position of the nose, to enable calibration of the photo; according to a variant a plaster model can be used on which a reference length can be measured; such a measuring rule or reference length is further not necessary if a face-bow as described with reference to figure 2 is used.

According to a possible embodiment the software asks a user to enter determined reference points for each of the variables to be determined. It will thus be possible for instance to click on the pupils, after which the software displays the eye line on the photo and calculates the direction thereof. In similar manner the lower edge of the canine teeth can be clicked, after which the software displays the canine line on the screen and calculates the direction and length. The incisal edge (the tooth progression), the mid-line, the smile line and the gingival line are determined in the same way on the basis of the photos of the front view of the patient, see also figure 1. The direction of the camper's plane and of the occlusion plane is determined on the basis of the photos of the side view.

In a subsequent step 103 the ideal tooth progression is calculated, preferably by software. In an ideal tooth progression the inclination of the occlusion plane in the front view, i.e. the canine line, must be parallel to the eye line. The difference in angle between the canine line and the eye line thus determines how much correction the canine line requires. In an ideal tooth progression the mid-line between the front teeth further preferably runs perpendicularly of and through the centre of the line section from the left to the right nostril. A second correction thus consists of a correction of the mid-line. In an ideal tooth progression the inclination of the occlusion plane is further preferably equal to the inclination of the camper's plane. A third correction thus relates to the inclination of the occlusion plane. Finally, in an ideal tooth progression the visible length of the front teeth, measured on a central incisor during speaking, is about 1.5 to 2 mm or more, and the gum progression is preferably parallel to the ideal incisal edge progression in front view. This determines a fourth correction, particularly of the length of the teeth.

According to an advantageous embodiment, the position of the front tooth in side view is also taken into account, wherein this is evaluated and compared to the situation with closed lips. In the case of too much or too little lip fullness at the position of the front teeth in profile view, this can be further measured and compensated for the purpose of determining the ideal tooth position.

On the basis of these first, second, third and fourth correction measures the exact position of the occlusion plane and the position and dimensions of the dental arch can thus be defined.

Note that, depending on the wishes of the patient and the chosen treatment, it is also possible not to implement all the above stated corrections. It can for instance be the case in practice that the ideal tooth progression cannot or need not be followed completely. The position of the mid-line may for instance not be changed very much when grinding and fitting crowns on front teeth.

Once the ideal corrections are known, the ideal dental arch can be displayed on the photos of the front and side view of the patient. According to an advantageous embodiment, the software allows the corrections made to be further modified and refined for the best possible end result.

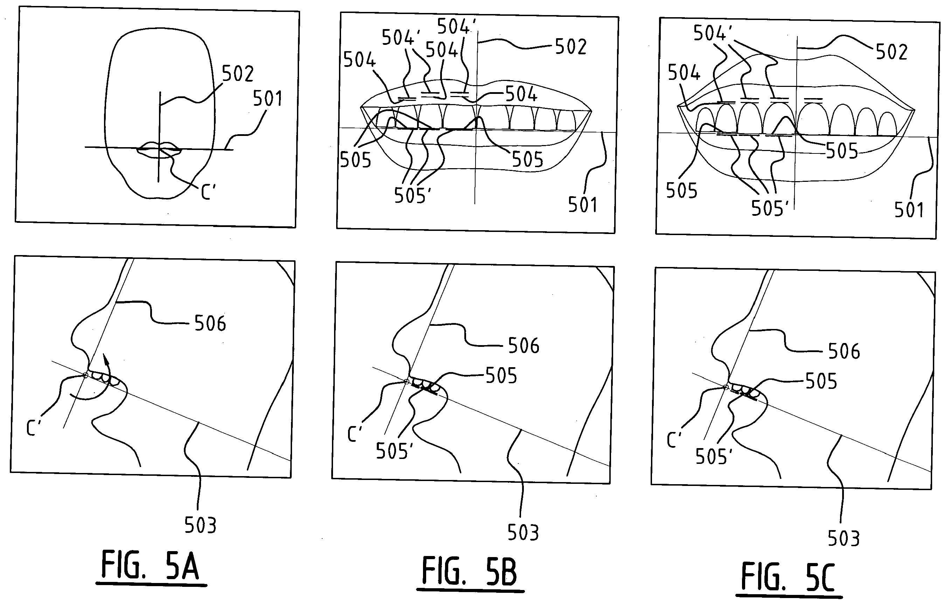

Note that it is also possible not to perform all measurements stated in step 102 and to omit step 103. This variant is for instance possible when the face-bow of figure 2 is used. The software can then comprise a simulation component in which the ideal position of the tooth progression on the face is shown linked in a front view and a side view. A user clicks on several reference points of the tooth progression in the front and side view to enable linking of the images of the front and the side view to each other. Once these images have been linked the ideal tooth progression can be shown using line sections displaceable by a user. The user can then place these line sections in the desired position, after which these positions can be recorded for display on the master model. This is illustrated in figure 5. In a first step A of the simulation an image is shown of the front view of the patient and of a side view of the patient. Designated in the front view are a first reference line 501, which follows the tooth progression of the front teeth, and a second reference line 502 which follows the mid-line between the front teeth. Designated in the side view is a line 503 which coincides with the occlusion plane and which is thus coupled to line 501 in the front view. Further designated is a line 506 which is coupled to the mid-line 502 in the front view. The user can displace these lines 501, 502 manually, wherein lines 503 and 506 then automatically co-displace/rotate once the coupling has been finalized. A detail view of the mouth is then shown in front view, see step B. This detail view shows line sections 504, 505 for the purpose of designating the actual tooth progression. Line sections 504', 505' are further shown for the purpose of designating the ideal tooth progression. These line sections are preferably shown on the one hand in a front view with a normal lip position during speaking, see step B, and on the other in a position of the mouth with raised lip, see step C. The link between the front view and the side view enables automatic co-displacement of the line sections in the side views. In this way a user can thus manually designate and store the actual and ideal tooth progressions using line sections 504, 504' and 505, 505'. This ideal tooth progression can then be transferred to the master model, see below.

According to yet another option, the detailed facial analysis of step 102 is not performed, but a shortened analysis is carried out in which the tooth progression is clicked only in the front and side view, for instance of the canine line in front view and the direction of the occlusion plane in side view. A number of references, which can be dragged by a user, are subsequently shown on the screen for each front tooth. The user can then modify these references manually, taking account of the other features of the face, in order to thus arrive at an ideal tooth arrangement. Once the user has set all references properly, they are saved and the corrections to be implemented are calculated so that they can be displayed later on the ideal master model and the tooth arrangement can be produced, see below.

In a subsequent step 105a, 105b a study model is made of the teeth of the patient. Note that this step can also be performed before step 101, or immediately following step 101. This can be a physical study model (step 105a), typically a plaster model, or a virtual study model (step 105c), for instance by performing a 3D scan of the teeth of the patient. If a physical study model is made, a possible embodiment of the method according to the invention comprises the steps 106a, 108a, 110a and 112a. According to another variant the steps 106b, 107, 108b, 110b and 111b are performed, see below.

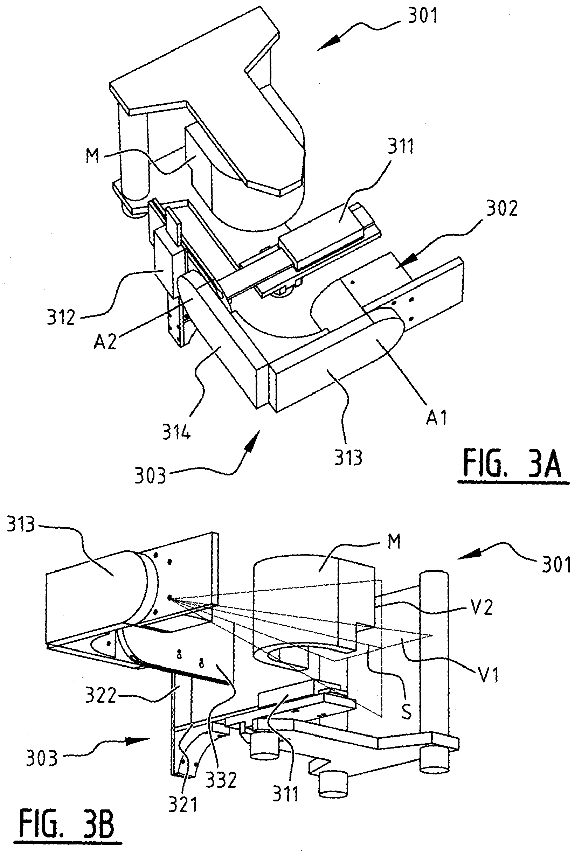

In step 106 the study model M is placed in an articulator. This is illustrated in figures 3A and 3B. Articulator 301 is provided with indicator means 302. Indicator means 302 are formed in the illustrated variant by a cross-shaped laser light which emits light in a first plane V1 and a plane V2 directed perpendicularly thereof, see figure 3B. Indicator means 302 are mounted on positioning means 303. Positioning means 303 are adapted to enable positioning of the indicator means such that the first plane substantially coincides with the canine line/the occlusion plane of the teeth of the study model M or with the ideal canine line/occlusion plane of the ideal tooth arrangement on the master model. The positioning means are further adapted to enable positioning of the plane V2 such that it coincides with the mid-line between the front teeth of the study model or with the ideal mid-line. Positioning means 303 comprise a first horizontally slidable arm 321 and a first digital distance measuring means 311 for measuring the position of horizontal arm 321. The positioning means further comprise a vertical arm 322 extending substantially perpendicularly of horizontal arm 321. A slide piece 332 can be moved vertically along vertical arm 322. A second digital distance measuring means 312 measures the displacement of slide piece 332 along vertical arm 322. Slide piece 332 is connected pivotally around an axis A2 to a rotation piece 314 which is provided with a digital angle measuring device for measuring the rotation of rotation piece 314 around axis A2 relative to slide piece 332. Rotation piece 314 is connected to a rotation piece 313 directed perpendicularly thereof, and the cross-shaped laser light 302 is connected pivotally around an axis A1 to rotation piece 313. Rotation piece 313 is provided with a digital angle measuring device for measuring the tilting of the cross-shaped laser light 302 relative to rotation piece 313.

Once the study model has been placed in the articulator, the laser planes V1, V2 are directed as follows in step 108a. In a first operation the cross-shaped laser light is tilted around axis A1 until the plane V1 is parallel to the canine line, after which the digital angle measuring device 313 is set to zero. The horizontal digital distance measuring means 311 is then displaced until the plane V2 substantially coincides with the mid-line of the front teeth, and the horizontal digital distance measuring means 311 is set to zero. The plane V1 is then directed toward the incisal edge of the central front tooth which has previously been used as reference in the software, see above, and toward the cuspid apex of the most dorsal tooth which has been used as reference in the software, see above, by tilting rotation piece 314 around axis A2. Following tilting, an additional vertical sliding of slide piece 332 and/or a horizontal sliding of arm 321 will typically also be necessary. The digital angle measuring device 314 is then set to zero. Finally, the vertical distance measuring means 312 can be set, wherein slide piece 332 is slid vertically upward/downward until the plane V1 arrives at the incisal edge of the central incisor. This vertical distance measuring means 312 is then set to zero.

In step 110a the digital measuring means 311, 313, 314 can be set using the corrections determined in step 103. The vertical distance measuring means 312 can then also be set with the correction for the tooth length determined in step 103. The planes V1 and V2 now thus designate the planes for an ideal tooth arrangement to be followed in the master model. In step 111a the study model is replaced in the articulator by the master model in which the reference to be followed is shown with laser planes V1, V2. This master model must of course be mounted in the same position as the study model, and particularly in the same position relative to the lower jaw. The master model can for instance be a toothless jaw model on which a new set of teeth has to be arranged, or a model of the ground stumps of the teeth of the patient on which a bridge has to be arranged.

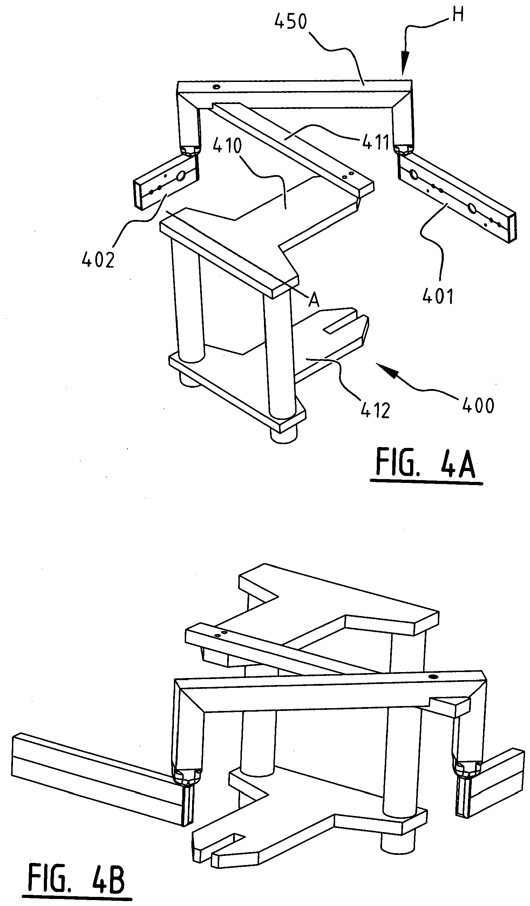

Steps 106b, 107, 108b, 110b and 111b will now be elucidated. In step 106b the study model is placed in an articulator which is shown schematically in figures 4A and 4B. The articulator is provided with an auxiliary frame H which is identical to the auxiliary frame H used in the face-bow of figure 2. As in figure 2, the auxiliary frame consists of an arm 450 intended for substantially horizontal mounting on the articulator. Since the study model is connected to upper plate 410 of the articulator, it is recommended to also connect the auxiliary frame which carries the cameras to upper plate 410. An arm 411 is fixedly connected for this purpose to upper plate 410, on which arm the auxiliary frame H is placed. Arm 411 is similar to arm 260 of the face-bow and is intended to run substantially parallel to the front side of the study model. A first and second video camera 401, 402 are mounted on the auxiliary frame. Video camera 401 can be a double video camera as described for figure 2. The upper plate 410 of the articulator can typically be tilted around an axis A and/or can be adjustable and/or can be slidable at a fixed or adjustable angle relative to lower plate 412 of the articulator. The images taken by cameras 401, 402 can be shown live on a screen. In step 107 reference points are clicked on the live image. These reference points can for instance be the canine line, the mid-line and the occlusion plane. An overlay is simultaneously displayed over the live image of each of the two cameras or, in the case of three cameras, over the live image of the 3D representation. This overlay shows the ideal tooth arrangement and is rotated, translated and resized on the basis of the reference lines designated by the user and the corrections precalculated in step 103.

Note that it is also possible to work with standard photos of a front and side view of the plaster model instead of using the setup of figures 4A and 4B. In such a situation the camera positions are not known, but can be calculated on the basis of the reference points clicked by a user in the front and side views such that the images of the front and side views can be linked for a realistic joint representation, with the option of linked sliding and tilting as has been illustrated with reference to figure 5.

If the face-bow of figure 2 is used, the images of the face can be transferred and the overlay will only have to be repositioned a little because the camera positions in the articulator are the same as those in the face-bow. This is made possible in that the position of the upper jaw is physically transferred by fixing a bite fork in the face-bow while the upper jaw bites down thereon. This bite fork position can then be transferred from the face-bow onto the articulator. According to another option, the position of the upper jaw can be transferred digitally. This can be done by displaying as video overlay a transparent image of the video recordings of the upper jaw taken by the face-bow of figure 2 in both views of the live images of the study model in the articulator. The study model can in this way be manually matched with the overlay, be fixed and then cast in plaster in order to obtain a plaster cast study model, for instance making use of a split-cast technique in which the study model is fixed with plaster to a split-cast plate which can be snapped fixedly into the articulator. The master model can then be cast in plaster in similar manner.

It is further possible, on the basis of live images made while the patient wears the face-bow of figure 2, to allow the patient to "speak over" the study model by digitally cutting out the oral cavity in the different video frames and making the study model in the articulator visible behind the oral cavity. In the case of a 3D recording with face-bow and with a study model in the articulator the patient can thus be shown visualized in 3D on a 3D screen, speaking over a 3D plaster model, or with reference lines and planes, to be followed in 3D, showing an ideal tooth arrangement.

Note that by linking front and side views of standard photos a 3D image can also be formed of the planes and tooth positions of an ideal tooth arrangement to be followed. If the face-bow of figure 2 is used, these three images are however in general even more precise.

Steps 105c, 108c, 110c and 111c will now be elucidated. If this variant of the method is performed, it is not a physical study model which is made but a digital study model, for instance by making a scan of the teeth of the patient. Note that it is also possible to make a physical study model and to subsequently make a digital 3D model of the study model by means of a scan. Such a digital study model is made in step 105c. This digital study model is typically created in an STL format, and this STL format of the scan is loaded into modified software into which the photos/videos taken of the patient are also loaded. In step 108c the digital study model is reoriented relative to the photos by determining reference lines (for instance the canine line, the occlusion plane and the mid-line) in the digital model and matching these lines with the references in the images determined earlier in step 102. This repositioned digital study model is then saved in step 110c together with the corrections calculated earlier in step 103. In step 111c the repositioned digital study model is loaded into software intended for the purpose of producing the ideal tooth arrangement.

In step 113 the tooth colour is determined on the basis of the photos/videos of a front and side view of the patient taken in step 101. Note that this step can also be performed at an earlier stage. Finally, in step 114a, 114b, 114c the tooth arrangement is produced on the master model.

According to a possible embodiment it is possible in step 105 to show a simulation of a front and side view of the patient with an overlay of the ideal tooth arrangement. This simulation can be displayed on an image of a study model arranged in an articulator, on previously made analysis images of the face of the patient; or on live images of the face of a patient, for instance during a procedure. In this latter case a surgeon is provided with a virtual guide plate which can for instance be useful during an implant operation. Such a virtual guide plate can also be useful for a dentist, for instance in order to verify the extent to which gingival correction should take place or how much more should be ground off the teeth in order to remain within the final morphology. When use is made of two front cameras in the face-bow of figure 2, a second screenshot can be made which is based on the recording by the second front camera. The digital study model can be positioned with the two different screenshots behind this stereo front view and can be used as second video overlay in order to match the live image of the second front camera such that a 3D image of the speaking patient can be displayed on a 3D screen with a 3D representation of the virtual tooth arrangement. Use can be made of a similar method to display the ideal morphology to follow on images of a physical model mounted in the articulator of figure 4.

The skilled person will appreciate that the invention is not limited to the above described exemplary embodiments and that the scope of protection is defined solely by the following claims.

## Claims

1. A method for using data of a patient in making a dental element or aid for adjusting the teeth, said patient having a dental arch with an inclination, the method comprising the following steps of:
making at least a first photographic image of a front view of the patient and a second photographic image of a side view of the patient (101) using a face-bow (200) on which two cameras are mounted in a determined disposition, such that the two cameras are mounted in known positions relative to determined locations on the head of the patient; calculating (103) on the basis of the first and second photographic images:
a first measure for the direction of the canine line relative to the direction of the eye line, and
a second measure for the direction of the occlusion plane relative to the camper's plane, respectively; said first and second measure defining the inclination of the dental arch of the patient;
providing a virtual or real study model of at least a part of the teeth of the patient;
providing on the basis of the study model a virtual or real master model for the dental element or aid;
transferring the first and second measures to the master model on the basis of the direction of the canine line and the occlusion plane in the study model;
producing the dental element or aid on the master model on the basis of the transferred first and second measures.

2. The method of claim 1, wherein the face-bow (200) is provided with a number of supports adapted for placing at different locations on the head of the patient.

3. The method of claim 1 or 2, **characterized in that** the calculation further comprises calculating
a third measure for the position of the mid-line between the front teeth relative to the position of the centre of the line section between left and right nostril, and that this third measure is also transferred to the master model on the basis of the position of the mid-line in the study model; and/or
a fourth measure for the visible length of the incisors; and that this fourth measure is also transferred to the master model; and/or
a fifth measure for the position of the front tooth in side view relative the closed lip position; and that this fifth measure is also transferred to the master model.

4. The method as claimed in any of the foregoing claims, **characterized in that** the study model is a physical study model and is arranged in an articulator (400), wherein a first and a second image of respectively a front view and of a side view of the study model are obtained on the basis of two video cameras, after which the direction of the canine line and the occlusion plane in the study model are determined on the first and second images of the study model such that the first and second measures can be transferred to the master model while making use of the determined directions.

5. The method as claimed in claims 4, **characterized in that** the two video cameras are arranged on the articulator (400) in the same disposition as the determined disposition of the two video cameras on the face-bow (200).

6. Method as claimed in any of the foregoing claims, **characterized in that** the first photographic image of a front view of the patient and the second photographic image of a side view of the patient form part of a first and a second video recording made using two video cameras mounted in a determined disposition on a face-bow.

7. A system for using data of a patient in making a dental element or aid for adjusting the teeth, as defined in any of the previous method claims, said patient having a dental arch with an inclination; said system comprising:
a face-bow (200) on which two cameras are mounted in a determined disposition, such that, in use, the two cameras are mounted in known positions relative to determined locations on the head of the patient, said face-bow being configured to be positioned substantially immovably on the head of a patient, wherein the two cameras comprise a first camera arranged on the face-bow, said first camera being positioned to record a first image of the front view of the patient, and a second camera arranged on the face-bow, said second camera being positioned to record a second image of a side view of the patient;
a computer program comprising computer-executable instructions to perform, when the program is run on a computer, the steps of:
calculating on the basis of the first and second photographic images a first measure for the direction of the canine line relative to the direction of the eye line, and a second measure for the direction of the occlusion plane relative to the camper's plane, respectively; said first and second measure defining the inclination of the dental arch of the patient;
transferring the first and second measures to a master model for the dental element or aid on the basis of the direction of the canine line and the occlusion plane in the study model.

8. The system of claim 7, wherein the face-bow is provided with a number of supports adapted for placing at different locations on the head of the patient.

9. The system of any one of the claims 7 or 8, wherein the computer program further comprises computer-executable instructions to perform, when the program is run on a computer, the steps of:
showing a simulation of a front view and a side view of the patient with a overlay of an ideal tooth arrangement corresponding with the master model, wherein the simulation is displayed on any one of the following: images of a study model arranged in an articulator; still images of the face of the patient; live images of the face of a patient.

## Patentansprüche

1. Verfahren zum Verwenden von Daten eines Patienten beim Herstellen eines Dentalelements oder einer Hilfe zum Ausrichten der Zähne, wobei der Patient einen Zahnbogen mit einer Neigung aufweist, wobei das Verfahren die folgenden Schritte umfasst:
Aufnehmen von zumindest einem ersten fotografischen Bild von einer Vorderansicht des Patienten und von einem zweiten fotografischen Bild einer Seitenansicht des Patienten (101), wobei ein Gesichtsbogen (200) verwendet wird, auf welchem zwei Kameras in einer bestimmten Anordnung montiert sind, so dass die zwei Kameras in bekannten Positionen relativ zu bestimmten Stellen auf dem Kopf des Patienten montiert sind;
Berechnen (103) auf der Basis von dem ersten und dem zweiten fotografischen Bild:
eines ersten Maßes für die Richtung der Eckzahnlinie relativ zu der Richtung der Augenlinie, und
eines zweiten Maßes für die Richtung der Okklusionsebene relativ zu der Camper'schen Ebene; wobei das erste und das zweite Maß die Neigung des Zahnbogens des Patienten definieren;
Vorsehen eines virtuellen oder realen Studienmodells von zumindest einem Teil der Zähne des Patienten;
Vorsehen, auf der Basis des Studienmodells, eines virtuellen oder eines realen Mastermodells für das Dentalelement oder für die Hilfe;
Übertragen des ersten und des zweiten Maßes an das Mastermodell auf der Basis von der Richtung des Eckzahnbogens und der Okklusionsebene in dem Studienmodell;
Herstellen des Dentalelements oder der Hilfe auf dem Mastermodell auf der Basis von dem übertragenen ersten und zweiten Maß.

2. Verfahren gemäß Anspruch 1, wobei der Gesichtsbogen (200) mit einer Anzahl von Trägern versehen ist, welche angepasst sind, um an verschiedenen Stellen des Kopfes des Patienten platziert zu werden.

3. Verfahren gemäß Anspruch 1 oder 2, **dadurch gekennzeichnet, dass** die Berechnung weiterhin umfasst ein Berechnen
eines dritten Maßes für die Position der Mittellinie zwischen den Vorderzähnen relativ zu der Position des Zentrums der Schnittlinie zwischen linkem und rechtem Nasenflügel, und dass dieses dritte Maß auch an das Mastermodell übertragen wird auf der Basis der Position der Mittellinie in dem Studienmodell; und/oder
eines vierten Maßes für die sichtbare Länge der Schneidezähne; und dass dieses vierte Maß auch an das Mastermodell übertragen wird; und/oder
eines fünften Maßes für die Position des Vorderzahns in Seitenansicht relativ zu einer geschlossenen Lippenposition; und dass dieses fünfte Maß auch an das Mastermodell übertragen wird.

4. Verfahren gemäß irgendeinem der vorhergehenden Ansprüche, **dadurch gekennzeichnet, dass** das Studienmodell ein physisches Studienmodell ist und in einem Artikulator (400) angeordnet ist, wobei ein erstes bzw. ein zweites Bild von einer Vorderansicht und von einer Seitenansicht des Studienmodells auf der Basis von zwei Videokameras erhalten werden, wonach die Richtungen der Eckzahnlinie und der Okklusionsebene in dem Studienmodell anhand des ersten und des zweiten Bildes des Studienmodells bestimmt werden, so dass das erste und das zweite Maß an das Mastermodell übertragen werden können, während die bestimmten Richtungen verwendet werden.

5. Verfahren gemäß Anspruch 3, **dadurch gekennzeichnet, dass** die zwei Videokameras auf dem Artikulator (400) in der gleichen Anordnung wie die bestimmte Anordnung von den zwei Videokameras auf dem Gesichtsbogen (200) angeordnet sind.

6. Verfahren gemäß irgendeinem der vorhergehenden Ansprüche, **dadurch gekennzeichnet, dass** das erste fotografische Bild einer Vorderansicht des Patienten bzw. das zweite fotografische Bild einer Seitenansicht des Patienten einen Teil von einer ersten und einer zweiten Videoaufzeichnung bilden, welche unter Verwendung von zwei Videokameras gemacht wird, welche in einer bestimmten Anordnung auf einem Gesichtsbogen montiert sind.

7. System zum Verwenden von Daten eines Patienten beim Herstellen eines Dentalelements oder einer Hilfe zum Ausrichten der Zähne, wie in irgendeinem der vorhergehenden Verfahrensansprüche definiert, wobei der Patient einen Zahnbogen mit einer Neigung aufweist, wobei das System umfasst:
einen Gesichtsbogen (200), auf welchem zwei Kameras in einer bestimmten Anordnung montiert sind, so dass im Betrieb die zwei Kameras im Wesentlichen unbeweglich auf dem Kopf eines Patienten montiert sind, wobei die zwei Kameras eine erste Kamera, welche auf dem Gesichtsbogen angeordnet ist, wobei die erste Kamera positioniert ist, um ein erstes Bild von der Vorderansicht des Patienten aufzuzeichnen, und eine zweite Kamera umfassen, welche auf dem Gesichtsbogen angeordnet ist, wobei die zweite Kamera positioniert ist, um ein zweites Bild von einer Seitenansicht des Patienten aufzuzeichnen;
ein Computerprogramm, welches durch einen Computer ausführbare Instruktionen umfasst, um, wenn das Programm auf einem Computer läuft, die folgenden Schritte auszuführen:
Berechnen, auf der Basis des ersten und des zweiten fotografischen Bildes, eines ersten Maßes für die Richtung der Eckzahnlinie relativ zu der Richtung der Augenlinie, und eines zweiten Maßes für die Richtung der Okklusionsebene relativ zu der Camper'schen Ebene;
wobei das erste und das zweite Maß die Neigung des Dentalbogens des Patienten definieren;
Übertragen des ersten und des zweiten Maßes an ein Mastermodell für das Dentalelement oder die Hilfe auf der Basis von der Richtung der Eckzahnlinie und der Okklusionsebene in dem Studienmodell.

8. System gemäß Anspruch 7, wobei der Gesichtsbogen mit einer Anzahl von Trägern versehen ist, welche angepasst sind, um an verschiedenen Stellen auf dem Kopf des Patienten platziert zu werden.

9. System gemäß irgendeinem der Ansprüche 7 oder 8, wobei das Computerprogramm weiterhin durch einen Computer ausführbare Instruktionen umfasst, um, wenn das Programm auf einem Computer läuft, die folgenden Schritte auszuführen:
Zeigen einer Simulation einer Vorderansicht und einer Seitenansicht des Patienten mit einer Überlagerung einer idealen Zahnanordnung entsprechend dem Mastermodell, wobei die Simulation auf irgendeinem der Folgenden angezeigt wird: ein Studienmodells, welches in einem Artikulator angeordnet ist; Standbildern von dem Gesicht des Patienten; Livebildern von dem Gesicht eines Patienten.

## Revendications

1. Procédé d'utilisation de données d'un patient dans la fabrication d'un élément ou auxiliaire dentaire de réglage des dents, ledit patient ayant une arcade dentaire avec une inclinaison, le procédé comprenant les étapes suivantes de :
réalisation d'au moins une première image photographique d'une vue de face du patient et une seconde image photographique d'une vue latérale du patient (101) en utilisant un arc facial (200) sur lequel deux appareils de capture d'image sont montés dans une disposition déterminée, de sorte que les deux appareils de capture d'image sont montés dans des positions connues par rapport à des emplacements déterminés sur la tête du patient ;
calcul (103) sur la base des première et seconde images photographiques :
d'une première mesure pour la direction de la ligne des canines par rapport à la direction de la ligne des yeux, et
d'une deuxième mesure pour la direction du plan d'occlusion par rapport au plan de Camper, respectivement ; ladite première et deuxième mesure définissant l'inclinaison de l'arcade dentaire du patient ;
fourniture d'un modèle d'étude virtuel ou réel d'au moins une partie des dents du patient ;
fourniture, sur la base du modèle d'étude, d'un modèle maître virtuel ou réel pour l'élément ou auxiliaire dentaire ;
transfert des première et deuxième mesures vers le modèle maître sur la base de la direction de la ligne des canines et du plan d'occlusion dans le modèle d'étude ;
production de l'élément ou auxiliaire dentaire sur le modèle maître sur la base des première et deuxième mesures transférées.

2. Procédé selon la revendication 1, dans lequel l'arc facial (200) est doté d'un certain nombre de supports adaptés pour le placement à différents emplacements sur la tête du patient.

3. Procédé selon la revendication 1 ou 2, **caractérisé en ce que** le calcul comprend en outre le calcul
d'une troisième mesure pour la position de la ligne médiane entre les dents de devant par rapport à la position du centre de la section de ligne entre la narine gauche et droite, et que cette troisième mesure est également transférée vers le modèle maître sur la base de la position de la ligne médiane dans le modèle d'étude ; et/ou
d'une quatrième mesure pour la longueur visible des incisives ; et que cette quatrième mesure est également transférée vers le modèle maître ; et/ou
d'une cinquième mesure pour la position de la dent de devant dans la vue latérale par rapport à la position de lèvre fermée ; et que cette cinquième mesure est également transférée vers le modèle maître.

4. Procédé selon l'une quelconque des revendications précédentes, **caractérisé en ce que** le modèle d'étude est un modèle d'étude physique et est agencé dans un articulateur (400), dans lequel une première et une seconde image de respectivement une vue de face et d'une vue latérale du modèle d'étude sont obtenues sur la base de deux appareils de capture d'image vidéo, après quoi la direction de la ligne des canines et le plan d'occlusion dans le modèle d'étude sont déterminés sur les première et seconde images du modèle d'étude de sorte que les première et deuxième mesures peuvent être transférées vers le modèle maître tout en utilisant les directions déterminées.

5. Procédé selon la revendication 4, **caractérisé en ce que** les deux appareils de capture d'image vidéo sont agencés sur l'articulateur (400) dans la même disposition que la disposition déterminée des deux appareils de capture d'image vidéo sur l'arc facial (200).

6. Procédé selon l'une quelconque des revendications précédentes, **caractérisé en ce que** la première image photographique d'une vue de face du patient et la seconde image photographique d'une vue latérale du patient font partie d'un premier et d'un second enregistrement vidéo utilisant deux appareils de capture d'image vidéo montés dans une disposition déterminée sur un arc facial.

7. Système d'utilisation de données d'un patient dans la fabrication d'un élément ou auxiliaire dentaire de réglage des dents, tel que défini selon l'une quelconque des revendications de procédé précédentes, ledit patient ayant une arcade dentaire avec une inclinaison ; ledit système comprenant :
un arc facial (200) sur lequel deux appareils de capture d'image sont montés dans une disposition déterminée, de sorte que, en utilisation, les deux appareils de capture d'image sont montés dans des positions connues par rapport à des emplacements déterminés sur la tête du patient, ledit arc facial étant configuré pour être positionné de manière sensiblement immobile sur la tête d'un patient, dans lequel les deux appareils de capture d'image comprennent un premier appareil de capture d'image agencé sur l'arc facial, ledit premier appareil de capture d'image étant positionné pour enregistrer une première image de la vue de face du patient, et un second appareil de capture d'image agencé sur l'arc facial, ledit second appareil de capture d'image étant positionné pour enregistrer une seconde image d'une vue latérale du patient ;
un programme informatique comprenant des instructions exécutables sur ordinateur pour réaliser, lorsque le programme est exécuté sur un ordinateur, les étapes de :
calcul sur la base des première et seconde images photographiques d'une première mesure pour la direction de la ligne des canines par rapport à la direction de la ligne des yeux, et d'une deuxième mesure pour la direction du plan d'occlusion par rapport au plan de Camper, respectivement ; ladite première et deuxième mesure définissant l'inclinaison de l'arcade dentaire du patient ;
transfert des première et deuxième mesures vers un modèle maître pour l'élément ou auxiliaire dentaire sur la base de la direction de la ligne des canines et du plan d'occlusion dans le modèle d'étude.

8. Système selon la revendication 7, dans lequel l'arc facial est doté d'un certain nombre de supports adaptés pour le placement à différents emplacements sur la tête du patient.

9. Système selon l'une quelconque des revendications 7 ou 8, dans lequel le programme informatique comprend en outre des instructions exécutables sur ordinateur pour réaliser, lorsque le programme est exécuté sur un ordinateur, les étapes de :
présentation d'une simulation d'une vue de face et d'une vue latérale du patient avec une superposition d'un agencement de dent idéal correspondant au modèle maître, dans lequel la simulation est affichée sur l'un quelconque des éléments suivants : images d'un modèle d'étude agencé dans un articulateur ; images fixes du visage du patient ; images en direct du visage d'un patient.
